# EUROPÄISCHE PATENTSCHRIFT

(11) **EP 1 554 159 B1**
(45) Veröffentlichungstag und Bekanntmachung des Hinweises auf die Patenterteilung: **09.04.2008**
(21) Anmeldenummer: 03750364.6
(22) Anmeldetag: 19.09.2003
(51) Int. Cl.: B60P 7/08

(54) **LUFTFRACHTNETZ**
AIR FREIGHT NET
FILET DE FRET AERIEN

(30) Priorität: 23.09.2002 DE 10244310
(43) Veröffentlichungstag der Anmeldung: 20.07.2005
(73) Patentinhaber: Hoffmann Air Cargo Equipment GmbH, 61169 Friedberg (DE)
(72) Erfinder: SCHNEIDER, Michael, 61194 Niddatal (DE); SCHMIDT, Brigitte, 61231 Bad Nauheim (DE)
(74) Vertreter: Haar, Lucas Heinz Jörn
(86) Internationale Anmeldenummer: PCT/DE2003/003135
(87) Internationale Veröffentlichungsnummer: WO 2004/028908

(56) Entgegenhaltungen:
- DE-A- 2 651 744
- DE-U- 29 708 146
- DE-U- 29 810 014
- US-A- 4 000 344
- US-A1- 2003 123 946

## Beschreibung

Die Erfindung betrifft ein Luftfrachtnetz zur Sicherung von Frachtgut auf einer für den Lufttransport bestimmten Palette, welches aus miteinander zu Maschen verbundenen, aus Kunststoffasern hergestellten Seilen und/oder Bändern gebildet ist und bei welchem die Maschen an den seitlichen Befestigungsrändern Randschlaufen bilden, die mit einer Palette verbindbare Befestigungselemente aufweisen.

Ein aus US-PS 4,270,657 bekanntes Luftfrachtnetz zur Verankerung von Frachtgut auf einer Palette hat die Form eines Kreuzes mit einem rechteckigen Mittelfeld von etwa der gleichen Größe wie die Palette und vier rechteckigen Seitenfeldern, die sich an die Seiten des Mittelteils anschließen und deren Länge etwa der maximalen Ladehöhe der Palette entspricht. Das Netz wird mit dem Mittelteil über dem auf der Palette befindlichen Frachtgut so angeordnet, daß die Seitenfelder an den vier Seiten der Palette herunterhängen. Mit Hilfe von Befestigungselementen, die an den äußeren Rändern der Felder vorgesehenen sind, werden die Seitenfelder an der Palette befestigt. Zudem werden die einander benachbarten seitlichen Ränder der Seitenfelder mittels Spannleinen verbunden.

Luftfrachtnetze haben eine Reihe von Anforderungen zu erfüllen. Sie müssen stabil genug sein, um ein Verrutschen des Frachtgutes auch bei ungünstigen Flugbedingungen, z.B. bei Turbulenzen, zu verhindern. Daneben sollen Luftfrachtnetze möglichst leicht sein, um den Leergutanteil der Fracht möglichst niedrig halten zu können. Auch die Kosten für die Herstellung eines Luftfrachtnetzes sollen möglichst niedrig sein, da diese Kosten in die Frachtkosten eingehen. Aus dem gleichen Grund ist auch eine möglichst lange Haltbarkeit gefordert.

Aus GB 2 338 472 A ist ein Luftfrachtnetz bekannt, welches aus einem geflochtenen Kunststoffseil besteht, wobei die einzelnen Maschen durch Spleißen der einander kreuzenden Seilabschnitte gebildet sind. Eine solche Gestaltung ist geeignet, die hohen mechanischen Anforderungen an ein Luftfrachtnetz zu erfüllen, die Kosten zur Herstellung des Netzes sind jedoch vergleichsweise hoch.

Es ist auch bekannt, Luftfrachtnetze aus einem gewobenen Seil aus Kunststoff, z.B. Polyester, herzustellen, wobei die einzelnen Maschen durch Knoten gebildet sind. Die Herstellung eines solchen Netzes ist erheblich kostengünstiger. An den besonders hoch beanspruchten Stellen im Bereich der Befestigungselemente erweist sich das gewebte Seil jedoch als anfälliger.

Es ist weiterhin aus der gattungsgemäßen US-4000344 ein Luftfrachtnetz der eingangs angegebenen Art bekannt, bei welchem die Randschlaufen von einem umlaufenden Randseil gebildet sind, welches stärker ist als die inneren Seile, die das Netz bilden. Dies hat den Nachteil, daß die Befestigungselemente entsprechend größere Öffnungen zur Aufnahme des stärkeren Randseils haben müssen, was insgesamt zu einem höheren Netzgewicht führt.

Aus DE-29810014 ist ein Rückhaltenetz zur Befestigung in Innenräumen von Personenkraftwagen bekannt, das aus einer Vielzahl von Netzsträngen besteht, die zu Netzmaschen miteinander verbunden sind. Ein Teil der Netzstränge ist aus Fäden mit unterschiedlichem Spannungsdehnungsverhalten derart gewirkt, dass ihre Spannungsdehnungskennlinie mehrere Zugspannungsmaxima aufweist. Zur Befestigung sind an den Enden eines teils der Netzstränge Ösen angebracht.

Der Erfindung liegt die Aufgabe zugrunde, ein Luftfrachtnetz der eingangs genannten Art zu schaffen, welches an die unterschiedlichen Anforderungen besser angepaßt werden kann. Es soll weiterhin ein Netz geschaffen werden, das sich durch niedrige Herstellkosten, hohe Beanspruchbarkeit und hohe Verschleißfestigkeit auszeichnet.

Diese Aufgabe wird durch die in Patentanspruch 1 angegebenen Merkmale gelöst. Vorteilhafte Ausgestaltungen der Erfindung sind in den Ansprüchen 2 bis 14 angegeben.

Nach der Erfindung weist das Luftfrachtnetz zur Sicherung von Frachtgut auf einer Palette, welches aus einem aus Kunststoffasern hergestellten, insbesondere gewebten Seil gebildet ist und bei welchem die Maschen an den seitlichen Befestigungsrändern Randschlaufen bilden, die mit einer Palette verbindbare Befestigungselemente aufweisen, wobei das Netz einen zentralen Teil und sich an den zentralen Teil des Netzes anschließende, die Randschlaufen bildende Randstreifen aufweist und wobei zumindest die Randschlaufen aus einem dünneren Seil gebildet sind, das die gleiche oder eine höhere Zugfestigkeit hat als der zentrale Teil des Netzes. Vorzugsweise besteht hierbei das dünnere Seil aus einem Kunststoff hoher Zugfestigkeit, der hochgestreckte Fasern aus linearem Polyethylen mit hoher Molmasse aufweist. Dieser Kunststoff hat sich als besonders abriebfest erwiesen.

Die Erfindung umfaßt weiterhin ein derartiges Luftfrachtnetz mit einer Mittelachse und in Bezug auf die Mittelachse symmetrisch aufgebauten Feldern mit zur Mittelachse im wesentlichen parallelen Maschenreihen, wobei die Maschen wenigstens je einer Maschenreihe der symmetrisch aufgebauten Felder aus zwei in ihren physikalischen Eigenschaften unterschiedlichen Seilen oder Bändern bestehen.

Die Erfindung ermöglicht die Herstellung modular aus einzelnen Maschenreihen symmetrisch aufgebauter Luftfrachtnetze mit definierten, speziellen in bestimmten Maschenreihen eingestellten Eigenschaften, die in der Praxis erstrebenswert sind. So sind beispielsweise die unteren Maschenreihen und insbesondere die Randschlaufen stärker belastet, so daß für diese Bereiche hochfeste Seile mit kleinerem Durchmesser und höherer Abriebfestigkeit von Vorteil sind. Gleiches gilt für innerhalb der Felder liegende Maschenreihen, in die Verstellelemente eingehängt sind. Zur Erzielung von definiertem Dehnungsverhalten können beispielsweise einzelne Maschenreihen aus einem Seil höherer oder geringerer Dehnung hergestellt werden. Mit einer Oberflächenbehandlung, wie z.B. einer Beschichtung mit speziellen Polyurethanen oder Silikonen können die Eigenschaften der Schlaufen einzelner Maschenreihen an bestimmte Anforderungen angepaßt werden.

Nach einem weitern Vorschlag der Erfindung kann das eine der unterschiedlichen Seile oder Bänder gewebt und das andere geflochten sein. Auch kann das eine der unterschiedlichen Seile oder Bänder einen kleineren Querschnitt und/oder eine größere Dehnung als das andere haben. Vorzugsweise sind die Randmaschen an den seitlichen Befestigungsrändern der Felder aus zwei unterschiedlichen Seilen oder Bändern gebildet.

Insbesondere wird das erfindungsgemäße Luftfrachtnetz aus zwei unterschiedlichen Seilarten hergestellt. Der wesentliche Teil des Netzes, nämlich der zentrale, rechteckige Mittelteil und große Teile der sich daran anschließenden Felder sind aus einem gewebten Seil geknotet und daher besonders kostengünstig herstellbar. Die an die Befestigungselemente angeschlossenen Randschlaufen oder Randmaschen und gegebenenfalls die Schlaufen, in die Verstellelemente eingehängt sind, bestehen hingegen aus einem geflochtenen Seil. Dies hat den Vorteil, daß die Kraftübertragung an den Befestigungselementen verbessert wird und eine erheblich höhere Standzeit der in die Befestigungselemente eingreifenden Randschlaufen und damit insgesamt eine längere Lebensdauer des Luftfrachtnetzes erreicht wird. Da hierbei nach wie vor der größte Teil des Netzes aus gewobenem Seil besteht und nur in geringem Umfang teureres geflochtenes Seil benötigt wird, bleibt der durch die Verwendung des geflochtenen Seiles bedingte Anstieg der Herstellkosten so gering, daß er durch die sich aus der längeren Verwendungsdauer ergebende Ersparnis bei weitem übertroffen wird. Insgesamt wird somit ein in technischer und wirtschaftlicher Hinsicht vorteilhafter Kompromiß zur Erfüllung der unterschiedlichen Anforderungen an ein Luftfrachtnetz geschaffen.

Vorzugsweise wird das die Randschlaufen bildende geflochtene Seil durch Knoten mit den Maschen aus gewobenem Seil verbunden. Nach einem weiteren Vorschlag der Erfindung können auch eine oder mehrere Maschinenreihen des Randbereichs der Felder aus geflochtenem Seil gebildet sein. In diesem Fall können die aus geflochtenem Seil bestehenden Maschen an den Verbindungsstellen auch durch Spleißen oder Flechten verbunden sein.

Erfindungsgemäß kann weiterhin vorgesehen sein, daß das die Randschlaufen bildende, geflochtene Seil bei im Vergleich zum gewebten Seil des zentralen Teils gleicher oder höherer Zugfestigkeit einen kleineren Durchmesser hat als das gewebte Seil. Der kleinere Durchmesser wird durch Verwendung eines Kunststoffs besonders hoher Zugfestigkeit erreicht und hat den Vorteil, daß die Seilbeanspruchung durch starke Krümmung an den Befestigungselementen reduziert und dadurch die Alterung des Seils verlangsamt wird. Weiterhin erleichtert das dünnere Seil die Verschiebung des Seils innerhalb der Befestigungselemente und ermöglicht dadurch eine bessere Verteilung der Belastung. Von Vorteil ist außerdem, daß die Randschlaufen aus dünnerem Seil beim Transport der Paletten weniger stören, da sie an den Befestigungselementen weniger auftragen. Entsprechend geringer ist auch die Abnutzung der Randschlaufen und die Gefahr ihrer Beschädigung. Auch das geringere Gewicht des dünneren Seils ist ein Vorteil.

Ein zur Bildung der Randschlaufen besonders geeigneter Kunststoff hoher Zugfestigkeit weist hochgestreckte Fasern aus linearem Polyethylen mit hoher Molmasse auf. Hohe Molmasse bedeutet hier eine durchschnittliche Molmasse von wenigstens 400 000 g/mol. Lineares Polyethylen bedeutet, daß es weniger als eine Seitenkette je 100 C-Atome, vorzugsweise weniger als eine Seitenkette je 300 C-Atome hat. Das Polyethylen kann außerdem bis zu 5 mol % von einem oder mehreren anderen Alkenen, die damit copolymerisierbar sind, wie Propylen, Buten, Penten, 4-Metylpenten, Okten enthalten,

Besonders vorteilhaft ist die Verwendung von Polyethylenfasem, die aus Filamenten bestehen, die in einem Gelspinnprozeß, wie beispielsweise in GB-A-2042414 und GB-A-2051667 beschrieben, hergestellt sind. Dieser Prozeß umfaßt im wesentlichen die Herstellung einer Lösung eines Polyolefins von hoher Grenzviskosität, Spinnen der Lösung zu Filamenten bei einer Temperatur über der Lösetemperatur, Abkühlen der Filamente unter die Temperatur, bei welcher der Geizustand erreicht wird und Strecken der Filamente vor, während oder nach Entfernung des Lösungsmittels.

Zum Nachweis der erreichbaren Verlängerung der Haltbarkeit der Randschlaufen durch hochfesten Kunststoff wurden folgende Versuche durchgeführt:

Es wurden ein herkömmliche Seil aus Polyester mit einem dünneren Seil aus hochfestem Polyethylen, das von DSM High Performance Fibers B. V. unter der Bezeichnung Dyneema vertrieben wird, hinsichtlich des Abriebverhaltens verglichen. Beide Seile waren geflochten und hatten eine Bruchkraft von 6000 lb. Die Seile wurden auf einer Zugmaschine Z 050 der Firma Zwick durch eine Doppelfuß-Zurröse geführt und zyklisch auf 1500 lb belastet und jeweils anschließend auf 200 lb entlastet. Die Anzahl der Zyklen, die erreicht wurden, bis das Seil durchgescheuert war, wurde notiert. Ergebnisse:

| | |
|---|---|
| Seil aus Polyester: | 478 Zyklen |
| Seil aus Polyethylen: | 4.806 Zyklen |

Die Erfindung wird nachfolgend anhand eines Ausführungsbeispiels erläutert, das in der Zeichnung dargestellt ist. Es zeigen
- Figur 1: eine Ansicht eines ausgebreiteten, erfindungsgemäßen Luftfrachtnetzes,
- Figur 2: eine vergrößerte Darstellung eines Randabschnitts des Luftfrachtnetzes gemäß Figur 1 und
- Figur 3: einen Randabschnitt einer Ausführungsform mit Verstellelementen.

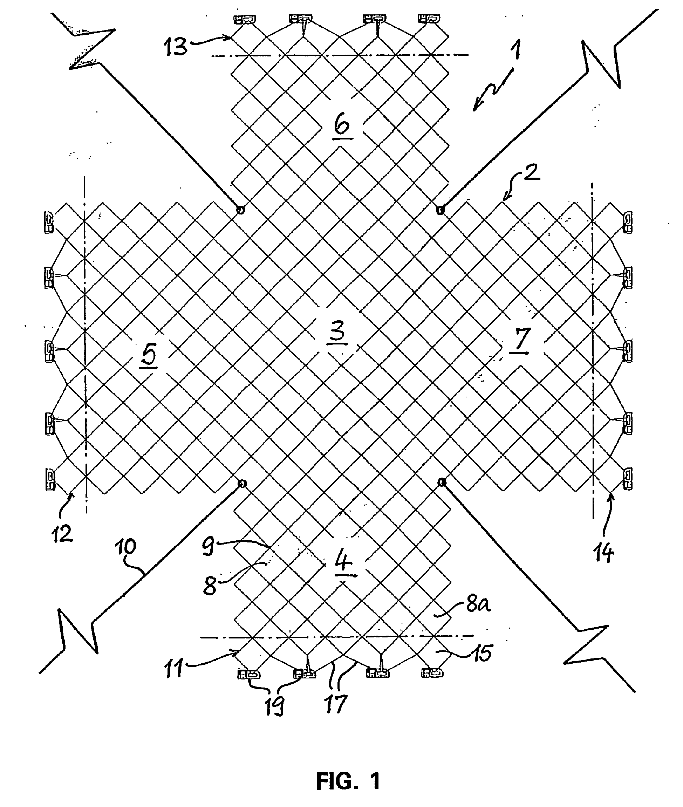

Das in Figur 1 dargestellte Luftfrachtnetz 1 weist einen kreuzförmigen, zentralen Teil 2 auf, der ein rechteckiges Mittelfeld 3 und vier rechteckige Seitenfelder 4, 5, 6, 7 umfaßt, die sich von den vier Seiten des Mittelfelds nach außen erstrecken.

Der zentrale Teil 2 besteht aus einem aus gewebtem Kunststoffseil definierter Zugfestigkeit hergestellten Netz mit rechteckigen Maschen 8 von im wesentlichen einheitlicher Größe, die durch Knoten 9 miteinander verbunden sind. An den vier Ecken des Mittelteils 3 ist jeweils ein Seil 10 angebracht, welches zum Verbinden der benachbarten Ränder zweier Felder dient und hierzu in die Randmaschen der Felder eingeflochten wird.

Die Seitenfelder 4 bis 7 sind ebenfalls aus gewebtem Kunststoffseil hergestellt, wobei das Seil jeweils parallel zum benachbarten Rand des Mittelfeldes unter Bildung von Maschen hin und her geführt ist. Dieser Aufbau ermöglicht mit der Bildung jeder Maschenreihe einen Wechsel der Seilart, und damit eine symmetrische modulare Netzstruktur mit Zonen unterschiedlicher Funktion.

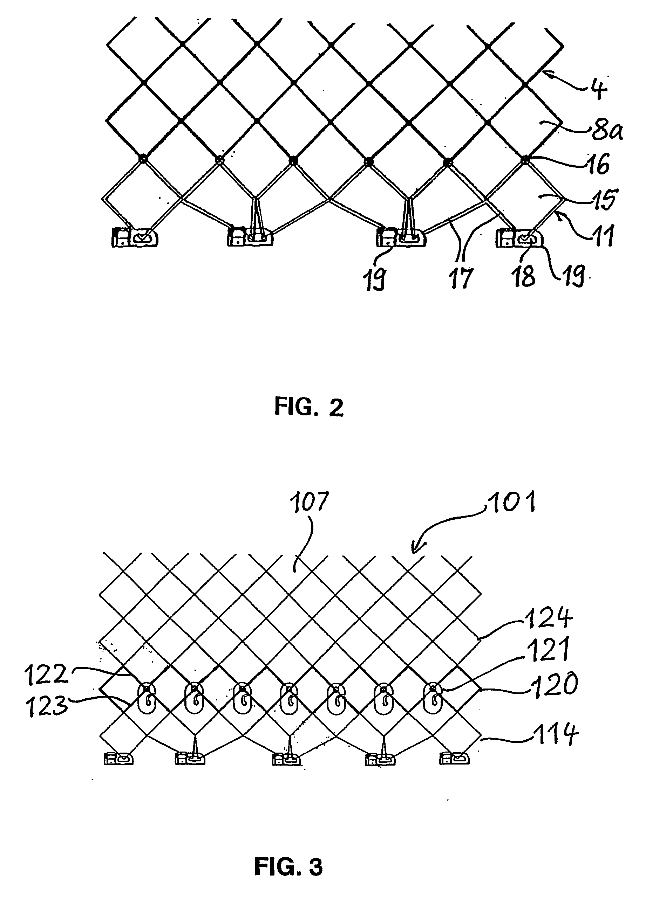

An die äußeren Enden der Seitenfelder 4 bis 7 des zentralen Teils 2 sind Randstreifen 11, 12, 13, 14 angesetzt, die jeweils aus einer Reihe Maschen 15 bestehen. Die Maschen 15 der Randstreifen 11 bis 14 sind, wie am Beispiel des Randstreifens 11 in Figur 2 gezeigt, durch Knoten 16 unverschiebbar an den Endmaschen 8a der Felder befestigt. Untereinander sind die Maschen 15 der Randstreifen 11 - 14 durch Spleißen so miteinander verbunden, daß jeder der beiden an den Verbindungsstellen einander kreuzenden Seilabschnitte den anderen Seilabschnitt einmal durchdringt. Die Maschen 15 bilden Randschlaufen 17, die durch Öffnungen 18 von Befestigungselementen 19 hindurchgeführt sind. Die Befestigungselemente 19 sind zur Verankerung des Netzes an einer Luftfrachtpalette bestimmt.

Die Randstreifen 11 - 14 bestehen aus einem geflochtenen Seil aus Kunststoff. Als Kunststoff kommen neben Polyester auch Polyamid und insbesondere hochfestes Polyethylen in Betracht. Durch die Herstellung der Randstreifen 11 - 14 aus geflochtenem Seil wird die Verschleißanfälligkeit des Netzes in diesem Bereich erheblich reduziert und seine Nutzungsdauer deutlich verlängert. Weiterhin wird ein besseres Gleitverhalten in den Öffnungen der Befestigungselemente erreicht, wodurch die Handhabung beim Befestigen und Lösen des Netzes vereinfacht und die Lastverteilung auf alle Befestigungselemente eines Randbereiches verbessert wird. Zudem kann für die Randstreifen 11 - 14 ohne nennenswerte Kostenerhöhung ein Seil höherer Bruchlast verwendet werden, um ungünstige Kraftübertragungsbedingungen im Bereich der Befestigungselemente zu kompensieren.

In Figur 3 ist ein Seitenfeld 107 eines Netzes 101 gezeigt, bei welchem in eine zum Randstreifen 114 parallele Maschenreihe 120 Verstellelemente 121 eingehängt sind. Die Verstellelemente 121 sind jeweils an einem gespleißten oder geknüpften Knoten angeordnet, wobei beide Seile 122, 123 (größere Strichstärke), welche die Maschenreihe 120 bilden, durch die Einhängeöffnungen der Verstellelemente 121 geführt sind. Die Verstellelemente 121 haben einen Haken, der in eine beliebige Schlaufe des Netzes 101 eingehängt werden kann, um auf diese Weise das Netz zu straffen.

Nach der Erfindung sind die Seile 122 und 123 besonders verschleißfest ausgeführt, beispielsweise geflochten. Die Seile 122, 123 können außerdem bei gleicher Zugfestigkeit dünner sein als die Seile der benachbarten Feldmaschenreihe 124, damit die Verstellelemente 121 möglichst klein und gewichtssparend gestaltet sein können. Schließt sich, wie bei der dargestellten Ausführung die Maschenreihe des Randstreifens 114 unmittelbar an, so empfiehlt es sich auch diese aus dem dünneren, verschleißfesten Seil herzustellen.

Abweichend von dem beschriebenen Ausführungsbeispiel können die aus geflochtenem Seil hergestellten Randbereiche des Luftfrachtnetzes auch zwei oder mehr Maschenreihen umfassen. Wird hierbei ein Seil höherer Bruchlast verwendet, so bietet diese Gestaltung auch die Möglichkeit, die Maschenzahl zu den Randschlaufen hin und damit auch die Zahl der Befestigungselemente ohne Einbußen hinsichtlich der Belastbarkeit des Netzes zu verringern. Hierdurch lassen sich Einsparungen an Gewicht und Herstellkosten erzielen.

Die Erfindung ist nicht auf die dargestellten Ausführungsformen des Netzes beschränkt, sondern kann mit Vorteil auch bei Netzen angewendet werden, die eine andere Grundform haben, beispielsweise ein sechseckiges Mittelfeld mit anschließenden rechteckigen Seitenfeldern.

## Patentansprüche

1. Luftfrachtnetz zur Sicherung von Frachtgut auf einer Palette, welches aus einem aus Kunststoffasern hergestellten, insbesondere gewebten Seil gebildet ist und bei welchem die Maschen (15) an den seitlichen Befestigungsrändern Randschlaufen (17) bilden, die mit einer Palette verbindbare Befestigungselemente (19) aufweisen, wobei das Netz einen zentralen Teil (2) und sich an den zentralen Teil (2) des Netzes (1) anschließende, die Randschlaufen (17) bildende Randstreifen (11, 12, 13, 14) aufweist, **dadurch gekennzeichnet, daß** zumindest die Randschlaufen (17) aus einem dünneren Seil gebildet sind, das die gleiche oder eine höhere Zugfestigkeit hat als der zentrale Teil (2) des Netzes.

2. Luftfrachtnetz nach Anspruch 1, **dadurch gekennzeichnet, daß** das dünnere Seil aus einem Kunststoff hoher Zugfestigkeit besteht, der hochgestreckte Fasern aus linearem Polyethylen mit hoher Molmasse aufweist.

3. Luftfrachtnetz nach einem der vorhergehenden Ansprüche, **dadurch gekennzeichnet, daß** es in Bezug auf zwei zueinander senkrechte Mittelachsen symmetrisch aufgebaute Felder (4, 5, 6, 7) hat, wobei die Maschen wenigstens je einer Maschenreihe (11, 12, 13, 14) der symmetrisch aufgebauten Felder aus zwei in ihren physikalischen Eigenschaften unterschiedlichen Seilen oder Bändern bestehen.

4. Luftfrachtnetz nach Anspruch 3, **dadurch gekennzeichnet, daß** das eine der unterschiedlichen Seile oder Bänder gewebt und das andere geflochten ist.

5. Luftfrachtnetz nach einem der Ansprüche 3 oder 4, **dadurch gekennzeichnet, daß** das eine der unterschiedlichen Seile oder Bänder einen kleineren Querschnitt hat als das andere.

6. Luftfrachtnetz nach einem der Ansprüche 3 bis 5, **dadurch gekennzeichnet, daß** das eine der unterschiedlichen Seile oder Bänder eine größere Dehnung hat als das andere.

7. Luftfrachtnetz nach einem der vorhergehenden Ansprüche, **dadurch gekennzeichnet, daß** die Felder des Netzes (1) und eine Schlaufe der Randmaschen an den seitlichen Befestigungsrändern der Felder aus einem gewebten Seil gebildet sind und daß die Randschlaufen (17) der Randmaschen aus einem geflochtenen Seil gebildet sind.

8. Luftfrachtnetz nach einem der vorhergehenden Ansprüche, **dadurch gekennzeichnet, daß** die Felder des Netzes hauptsächlich aus einem gewebten Seil oder Band bestehen und wenigstens eine Maschenreihe aus einem geflochtenen Seil gebildete Schlaufen aufweist, in die Verstellteile (121) eingehängt sind.

9. Luftfrachtnetz nach einem der Ansprüche 4 bis 8, **dadurch gekennzeichnet, daß** das geflochtene Seil durch Knoten (9) mit den Maschen (8a) aus gewebtem Seil verbunden ist.

10. Luftfrachtnetz nach einem der vorhergehenden Ansprüche, **dadurch gekennzeichnet, daß** die Randstreifen (11, 12, 13, 14) der Felder eine oder mehrere aus geflochtenem Seil gebildete Maschenreihen umfassen.

11. Luftfrachtnetz nach einem der vorhergehenden Ansprüche, **dadurch gekennzeichnet, daß** die Maschen (15) der Randstreifen (11, 12, 13, 14) untereinander durch Spleißen oder Flechten verbunden sind.

12. Luftfrachtnetz nach einem der vorhergehenden Ansprüche, **dadurch gekennzeichnet, daß** das geflochtene Seil der Randschlaufen (17) und/oder der Randstreifen (11, 12, 13, 14) bei zumindest gleicher Zugfestigkeit einen kleineren Durchmesser hat als das gewobene Seil des zentralen Teils (2).

13. Luftfrachtnetz nach einem der Ansprüche 4 bis 12, **dadurch gekennzeichnet, daß** das geflochtene Seil eine höhere Zugfestigkeit hat als das gewobene Seil.

14. Luftfrachtnetz nach einem der Ansprüche 4 bis 13, **dadurch gekennzeichnet, daß** das geflochtene Seil der unterschiedlichen Seile aus einem Kunststoff hoher Zugfestigkeit besteht, der hochgestreckte Fasern aus linearem Polyethylen mit hoher Molmasse aufweist.

## Claims

1. Airfreight net for securing cargo on a pallet, which net is formed of a rope, in particular a woven rope, made of plastics material fibres and in which the meshes (15) form edge loops (17) at the lateral fixing edges, which loops comprise fixing elements (19) that can be connected to a pallet, the net comprising a central part (2) and edge strips (11, 12, 13, 14) attached to the central part (2) of the net (1) and forming the edge loops (17), **characterised in that** at least the edge loops (17) are formed from a thinner rope which has a tensile strength greater than or equal to that of the central part (2) of the net.

2. Airfreight net according to claim 1, **characterised in that** the thinner rope is made of a plastics material with a high tensile strength which comprises highly-drawn fibres made of linear polyethylene with a high molar mass.

3. Airfreight net according to any one of the preceding claims, **characterised in that** it has regions (4, 5, 6, 7) configured symmetrically with respect to two mutually perpendicular centre axes, the meshes of at least one mesh row (11, 12, 13, 14) of each symmetrically configured region consisting of two ropes or bands which differ in their physical properties.

4. Airfreight net according to claim 3, **characterised in that** one of the differing ropes or bands is woven and the other is braided.

5. Airfreight net according to either claim 3 or claim 4, **characterised in that** one of the differing ropes or bands has a smaller cross-section than the other.

6. Airfreight net according to any one of claims 3 to 5, **characterised in that** one of the differing ropes or bands has a longer extension than the other.

7. Airfreight net according to any one of the preceding claims, **characterised in that** the regions of the net (1) and a loop of the edge meshes at the lateral fixing edges of the regions are formed of a woven rope, and **in that** the edge loops (17) of the edge meshes are formed of a braided rope.

8. Airfreight net according to any one of the preceding claims, **characterised in that** the regions of the net consist mainly of a woven rope or band and at least one mesh row comprises loops formed of a braided rope, in which loops adjusters (121) are hooked.

9. Airfreight net according to any one claims 4 to 8, **characterised in that** the braided rope is connected via knots (9) to the meshes (8a) made of woven rope.

10. Airfreight net according to any one of the preceding claims, **characterised in that** the edge strips (11, 12, 13, 14) of the regions comprise one or more mesh rows formed of braided rope.

11. Airfreight net according to any one of the preceding claims, **characterised in that** the meshes (15) of the edge strips (11, 12, 13, 14) are interconnected by splicing or braiding.

12. Airfreight net according to any one of the preceding claims, **characterised in that** the braided rope of the edge loops (17) and/or the edge strip (11, 12, 13, 14) has a smaller diameter, at least at the same tensile strength, than the woven rope of the central part (2).

13. Airfreight net according to any one of claims 4 to 12, **characterised in that** the woven rope has a greater tensile strength than the braided rope.

14. Airfreight net according to any one of claims 4 to 13, **characterised in that** the braided rope of the differing ropes consists of a plastics material with a greater tensile strength which comprises highly-drawn fibres made of linear polyethylene with a high molar mass.

## Revendications

1. Filet de fret aérien pour la sécurisation de fret sur une palette, qui est constitué d'une corde fabriquée à partir de fibres synthétiques, en particulier tissée, et dans lequel les mailles (15), sur les bords de fixation latéraux, forment des boucles de bord (17) qui présentent des éléments de fixation (19) pouvant être reliés à une palette, le filet comportant une partie centrale (2) et des bandes latérales (11, 12, 13, 14) dans le prolongement de la partie centrale (2) du filet (1) et formant les boucles de bord (17), **caractérisé en ce qu'**au moins les boucles de bord (17) sont formées par une corde plus fine, qui a une résistance à la traction égale ou supérieure que la partie centrale (2) du filet.

2. Filet de fret aérien selon la revendication 1, **caractérisé en ce que** la corde plus fine est constituée d'une matière plastique présentant une résistance à la traction élevée qui présente des fibres très étirées constituées d'un polyéthylène linéaire ayant une masse molaire élevée.

3. Filet de fret aérien selon l'une des revendications précédentes, **caractérisé en ce qu'**il comporte des sections (4, 5, 6, 7) disposées de manière symétrique par rapport à deux axes médians perpendiculaires l'un à l'autre, les mailles d'au moins une rangée de mailles (11, 12, 13, 14) des sections disposées de manière symétrique sont constituées de deux cordes ou bandes présentant des propriétés physiques différentes.

4. Filet de fret aérien selon la revendication 3, **caractérisé en ce que** l'une des différentes cordes ou bandes est tissée et l'autre est tressée.

5. Filet de fret aérien selon la revendication 3 ou 4, **caractérisé en ce que** l'une des différentes cordes ou bandes a une section plus petite que l'autre.

6. Filet de fret aérien selon l'une des revendications 3 à 5, **caractérisé en ce que** l'une des différentes cordes ou bandes a un allongement plus important que l'autre.

7. Filet de fret aérien selon l'une des revendications précédentes, **caractérisé en ce que** les sections du filet (1) et une boucle des mailles de bord, sur les bords de fixation latéraux des sections, sont constituées d'une corde tissée, et **en ce que** les boucles de bord (17) des mailles de bord sont constituées d'une corde tressée.

8. Filet de fret aérien selon l'une des revendications précédentes, **caractérisé en ce que** les sections du filet sont principalement constituées d'une bande ou d'une corde tissée, et au moins une rangée de mailles présente des boucles formées par une corde tressée, dans laquelle sont suspendus des éléments de réglage (121).

9. Filet de fret aérien selon l'une des revendications 4 à 8, **caractérisé en ce que** la corde tressée est reliée grâce à des noeuds (9) aux mailles (8a) de la corde tissée.

10. Filet de fret aérien selon l'une des revendications précédentes, **caractérisé en ce que** les bandes latérales (11, 12, 13, 14) des sections comprennent une ou plusieurs rangées de mailles formées par une corde tressée.

11. Filet de fret aérien selon l'une des revendications précédentes, **caractérisé en ce que** les mailles (15) des bandes latérales (11, 12, 13, 14) sont reliées les unes aux autres par épissage ou par tressage.

12. Filet de fret aérien selon l'une des revendications précédentes, **caractérisé en ce que** la corde tressée des boucles de bord (17) et/ou des bandes latérales (11, 12, 13, 14), pour une résistance à la traction au moins égale, ont un diamètre inférieur à celui de la corde tissée de la partie centrale (2).

13. Filet de fret aérien selon l'une des revendications 4 à 12, **caractérisé en ce que** la corde tressée a une résistance à la traction supérieure à celle de la corde tissée.

14. Filet de fret aérien selon l'une des revendications 4 à 13, **caractérisé en ce que** la corde tressée des différentes cordes est constituée d'une matière plastique ayant une résistance à la traction élevée, qui présente des fibres très étirées constituées de polyéthylène linéaire ayant une masse molaire élevée.
